# EUROPÄISCHE PATENTANMELDUNG

(11) **EP 3 821 715 A1**
(43) Veröffentlichungstag der Anmeldung: **19.05.2021**
(21) Anmeldenummer: 19209820.0
(22) Anmeldetag: 18.11.2019
(51) Int. Cl.: A23F 3/14, A23F 3/40, A23F 3/06

(54) **VERFAHREN ZUR HERSTELLUNG EINES AUFGUSSFÄHIGEN GRANULATS AUS TEE ODER TEEÄHNLICHEN ERSATZSTOFFEN UND DADURCH ERHÄLTLICHES AROMATISIERTES AUFGUSSFÄHIGES GRANULAT**

(71) Anmelder: Teekanne GmbH & Co. KG, 40549 Düsseldorf (DE)
(72) Erfinder: Schrottner, Frank, 47798 Krefeld (DE); Schnitzmeier, Uwe, 41836 Hückelhoven (DE); Maßmann, Felix, 40217 Düsseldorf (DE)
(74) Vertreter: Grünecker Patent- und Rechtsanwälte PartG mbB

(57) **Zusammenfassung**

Die Erfindung betrifft ein Verfahren zur Herstellung eines aufgussfähigen Granulats aus Tee oder teeähnlichen Ersatzstoffen, wobei ein Rohmaterial umfassend Tee und/oder teeähnliche Ersatzstoffe bereitgestellt wird, das Rohmaterial in einem Doppelschneckenextruder zu einem Granulat verarbeitet wird, der Doppelschneckenextruder eine Einzugszone, eine erste Kompressionszone, eine Entspannungszone und eine zweite Kompressionszone umfasst und das Rohmaterial zunächst in der Einzugszone in den Doppelschneckenextruder eingebracht wird, dann in der ersten Kompressionszone bei einem Druck von mehr als 5 bar extrudiert wird, in der Entspannungszone bei einem Druck von 5 bar oder weniger extrudiert wird und in der zweiten Kompressionszone bei einem Druck von mehr als 5 bar extrudiert wird. Die Erfindung betrifft außerdem ein nach diesem Verfahren herstellbares aufgussfähiges Granulat aus Tee oder einem teeähnlichen Ersatzstoff und wenigstens einem Aromastoff.

## Beschreibung

Die Erfindung betrifft ein Verfahren zur Herstellung eines aufgussfähigen Granulats aus Tee oder teeähnlichen Ersatzstoffen sowie ein nach diesem Verfahren erhältliches aromatisiertes aufgussfähiges Granulat.

Unter dem Begriff Tee im eigentlichen Sinne fallen Blätter und Aufguss der Teepflanze (Camellia sinensis). Die frischen Teeblätter werden nach bestimmten Verfahren durch Trocknen, Zerkleinern und Oxidation zu einem Rohmaterial verarbeitet, wobei je nach Grad der Oxidation zwischen verschiedenen Teesorten, beispielsweise grünem Tee oder schwarzen Tee, unterschieden wird. Die übliche Form der Teezubereitung sieht vor, das so erhaltene Rohmaterial mit heißem Wasser aufzubrühen.

Neben den Blättern der Teepflanze finden auch getrocknete Früchte, Kräuter, Blüten, Wurzeln oder Gewürze bei der Zubereitung von Aufgussgetränken Verwendung. Diese Rohstoffe werden im Rahmen der vorliegenden Erfindung als teeähnliche Ersatzstoffe bezeichnet. Auch diese Ersatzstoffe werden in getrockneter und verkleinerter Form mit heißem Wasser zu Aufgussgetränken aufgebrüht.

Ein alternatives Verfahren zur Herstellung von aufgussfähigem Material sieht vor, das nach dem bekannten Verfahren getrocknete und zerkleinerte Rohmaterial durch Extrusion zu einem Granulat zu verarbeiten.

So offenbart beispielsweise die EP 1787522 A1 die Herstellung eines Aufgussmaterials aus Tee, getrockneten Früchten und/oder getrockneten Kräutern. Dabei werden der Tee, die getrockneten Früchte und/oder getrockneten Kräuter als Ausgangsmaterial zunächst zu Partikelgrößen von weniger als 0,5 mm zerkleinert. Das so zerkleinerte Ausgangsmaterial wird anschließend in einem Extruder bei einem Druck von ca. 150 bar bis 160 bar zu einem Granulat mit einer Korngröße von 0,8 mm bis 1,5 mm extrudiert. Auf diese Weise soll ein Aufgussmaterial erhalten werden, dass auch bei vergleichsweise kurzem Kontakt mit der heißen Aufgussflüssigkeit eine ausreichende Menge an Geschmacksstoffen freisetzt, um ein schmackhaftes Aufgussgetränk zubereiten zu können.

Die EP 1836898 A1 offenbart ein Verfahren zur Herstellung eines aufgussfähigen Granulats aus Teeblättern, bei dem Teeblätter in einem Extruder bei einem Druck von 2 bar bis 300 bar zu einem Granulat verarbeitet werden. Das dadurch erhaltene Granulat soll sich zur Herstellung eines Aufgussgetränks mit einem besonders deutlichen Umami-Geschmack eignen.

Die WO 03/022066 A1 offenbart die Extrusion von getrockneten und geschnittenen Teeblättern zu einem Granulat bei einem Druck von nicht mehr als 15 bar in einem axialen oder radialen Extruder. Auf diese Weise soll der Anteil von Aufgussware mit großer Teilchengröße im Endprodukt erhöht werden.

Tee oder teeähnliche Erzeugnisse können zusätzlich aromatisiert sein. Zu diesem Zweck wird das Rohmaterial mit unterschiedlichen natürlichen oder naturidentischen Aromen angereichert. Die Aromen umfassen üblicherweise neben dem eigentlichen Aroma zusätzliche Trägerstoffe. Die Verwendung von Trägerstoffen ist erforderlich, um die oftmals flüchtigen Aromen in eine trockene, fließfähige, gut verarbeitungsfähige und staubfreie Form zu bringen. Als Trägerstoffe werden üblicherweise Polysaccharide, wie beispielsweise Maltodextrin oder Gummi arabicum, eingesetzt.

Zur Herstellung von Aromen, die Tee oder teeähnlichen Erzeugnissen zugesetzt werden können, werden ebenfalls Extrusionsverfahren eingesetzt. So offenbart beispielsweise die DE 10 2010 001 425 A1 ein Verfahren zur Extrusion von Extrakten, Aromen, Vitaminen und/oder deren Mischungen zur Herstellung von lagerstabilen Granulaten, die als Lebensmittelzutat für Tee und teeähnliche Erzeugnisse eingesetzt werden. Bei diesem Verfahren wird langkettiges Inulin als Trägerstoff verwendet. Durch dieses Verfahren sollen besonders gleichmäßige, abriebstabile und gegen Luftfeuchtigkeit stabile Granulate mit enger Korngrößenverteilung erhalten werden. Auch die EP 1 124 442 B1 offenbart ein Verfahren zur Extrusion einer Mischung einer kontinuierlichen Trägerphase und fein darin verteilten Aroma- oder Riechstoffen zur Herstellung eines Granulats mit besonders enger Größenverteilung. Auch bei diesem Verfahren werden Polysaccharide als Trägerstoffe eingesetzt.

Die für die Herstellung von aromatisierten Tees oder teeähnlichen Produkten erforderlichen Trägerstoffe entfalten selbst im Endprodukt keine geschmackliche Wirkung und müssen deswegen als solche in der Zutatenliste nicht gesondert gekennzeichnet werden. Allerdings werden die Trägerstoffe in der Zutatenliste den Aromen zugerechnet, wodurch für den Verbraucher der irreführende Eindruck entstehen kann, ein aromatisierter Tee enthalte eine übermäßig große Menge an Aromen. Aus diesem Grund besteht ein Interesse daran, den Anteil von Trägerstoffen in aromatisierten Tees oder teeähnlichen Produkten zu reduzieren.

Vor diesem Hintergrund stellt sich die vorliegende Erfindung die Aufgabe, ein Verfahren zur Herstellung eines aufgussfähigen Granulats aus Tee oder teeähnlichen Ersatzstoffen bereitzustellen, mit dem ein aromatisierter Tee oder teeähnlicher Ersatzstoff mit einem geringen Anteil an Trägerstoffen hergestellt werden kann. Vorzugsweise soll es das erfindungsgemäße Verfahren erlauben, vollständig auf den Zusatz von Trägerstoffen zu verzichten.

Diese Aufgabe wird gemäß der Erfindung durch ein Verfahren zur Herstellung eines aufgussfähigen Granulats aus Tee oder teeähnlichen Ersatzstoffen gelöst, wobei ein Rohmaterial umfassend Tee und/oder teeähnliche Ersatzstoffe bereitgestellt wird, das Rohmaterial in einem Doppelschneckenextruder zu einem Granulat verarbeitet wird, der Doppelschneckenextruder eine Einzugszone, eine erste Kompressionszone, eine Entspannungszone und eine zweite Kompressionszone umfasst und das Rohmaterial zunächst in der Einzugszone in den Doppelschneckenextruder eingebracht wird, dann in der Kompressionszone bei einem Druck von mehr als 5 bar extrudiert wird, in der Entspannungszone bei einem Druck von 5 bar oder weniger extrudiert wird und in der zweiten Kompressionszone bei einem Druck von mehr als 5 bar extrudiert wird.

Das erfindungsgemäße Verfahren ermöglicht die Herstellung eines aufgussfähigen Granulats mit einheitlicher Korngröße und einem geringen Staubanteil. Zudem erlaubt die erfindungsgemäße Verfahrensführung die Zugabe von Aromen zu dem Rohmaterial, ohne dass eine zusätzliche Zugabe von Trägerstoffen erforderlich ist. Auf diese Weise kann ein aromatisiertes aufgussfähiges Granulat hergestellt werden.

Es hat sich gezeigt, dass der Tee bzw. die teeähnlichen Ersatzstoffe durch die erfindungsgemäße Extrusion so aufbereitet werden, dass sie selbst als Trägerstoff für die Aromen dienen. Möglicherweise beruht dieser Effekt auf der Freisetzung von Polysacchariden aus dem Tee bzw. den teeähnlichen Ersatzstoffen, die auf diese Weise als Trägerstoffe wirksam werden können. Dieser Prozess wird im Rahmen der Erfindung auch als "Aktivierung" des Tees bzw. der teeähnlichen Ersatzstoffe bezeichnet.

Das erfindungsgemäße Verfahren eignet sich insbesondere zur Verarbeitung teeähnlicher Ersatzstoffe. Als teeähnliche Ersatzstoffe werden im Rahmen der Erfindung vorzugsweise getrocknete Früchte, getrocknete Wurzeln, getrocknete Gewürze, getrocknete Blüten und/oder getrocknete Kräuter eingesetzt. Besonders gute Ergebnisse werden mit der Verwendung von getrockneten Früchten und getrockneten Wurzeln erzielt.

Besonders geeignete teeähnliche Ersatzstoffe sind beispielsweise Anis, Apfel, Aroniabeeren, Baldrianwurzel, Birne, Bockshornkleesamen, Brombeeren, Cranberry, Fenchel, Galgantwurzel, Ginseng, Guaranasaat, Hagebutten, Heidelbeeren, Hibiskusblüten, Himbeeren, Holunderbeeren, Hopfen, Ingwerwurzel, Johannisbeeren, Kakaobohnen, Kardamon, Karotten, Kolanuss, Kümmel, Kurkuma, Limettenschalen, Orangenschalen, Pfeffer, Rote Beete, Sanddornbeeren, Sternanis, Süßholzwurzel, Taigawurzel, Wacholderbeeren, Zichorienwurzel, Zitronenschalen oder Mischungen davon.

In einer besonders bevorzugten Ausführungsform werden getrockneter Apfel und/oder getrocknete Ingwerwurzel verwendet.

Der Tee bzw. die teeähnlichen Ersatzstoffe können in einer mittleren Partikelgröße von vorzugsweise 0,1 mm bis 5 cm eingesetzt werden. Die mittlere Partikelgröße wird durch Siebverfahren bestimmt. Je nach Partikelgröße wird zwischen groben und feinem Rohmaterial unterschieden. Grober Tee bzw. teeähnliche Ersatzstoffe hat eine mittlere Partikelgröße von mehr als 0,5 mm bis 5 mm, vorzugsweise mehr als 0,5 mm bis 2 cm. Feiner Tee bzw. teeähnliche Ersatzstoffe hat eine mittlere Partikelgröße von 0,1 mm bis 0,5 mm.

Der Anteil von Tee oder teeähnlichen Ersatzstoffen an dem Rohmaterial beträgt vorzugsweise 50 bis 100 Gewichtsprozent, besonders bevorzugt 60 bis 99,99 Gewichtsprozent, am meisten bevorzugt 90-99,9 Gewichtsprozent, bezogen auf die Masse des in die Eingangszone des Extruders eingebrachten Rohmaterials.

Das in die Eingangszone des Extruders eingebrachte Rohmaterial hat vorzugsweise einen Wassergehalt von 0,01 bis 30 Gewichtsprozent, besonders bevorzugt 0,1 bis 15 Gewichtsprozent, am meisten bevorzugt 1 bis 10 Gewichtsprozent.

In einer bevorzugten Ausführungsform wird das Rohmaterial vor Eintrag in den Extruder oder im Laufe der Extrusion mit einem oder mehreren Aromen versetzt, um ein aromatisiertes aufgussfähiges Granulat herzustellen. Dabei beträgt der Anteil an Aromen bezogen auf die Gesamtmasse des Rohmaterials vorzugsweise 0,01 bis 15 Gewichtsprozent, besonders bevorzugt 0,02 bis 10 Gewichtsprozent, am meisten bevorzugt 0,05 bis 5 Gewichtsprozent. Der Anteil an Aromen wird anhand der nichtwässrigen Bestandteile der Aromen berechnet.

Vorzugsweise geschieht die Zugabe von Aromen vor Eintrag in den Extruder, innerhalb der ersten Kompressionszone, innerhalb der Entspannungszone und/oder bei Austritt aus dem Extruder.

Als Aromen werden im Rahmen der Erfindung einzelne Verbindungen oder Zusammensetzungen außer Tee oder teeähnlichen Ersatzstoffen bezeichnet, die den Geruch und/oder Geschmack des Tees und/oder der teeähnlichen Ersatzstoffe zum Nutzen für den Verbraucher verbessern beziehungsweise verändern. Das vorliegende Verfahren sieht die Verwendung sowohl von Aromastoffen als auch Aromaextrakten vor. Aromastoffe sind definierte chemische Stoffe, zu denen durch chemische Synthese gewonnene oder durch chemische Verfahren isolierte Aromastoffe und natürliche Aromastoffe gehören. Aromaextrakte sind andere Aromen als definierte chemische Stoffe, die durch geeignete physikalische, enzymatische oder mikrobiologische Verfahren aus Stoffen pflanzlichen, tierischen oder mikrobiologischen Ursprungs gewonnen und als solche verwendet oder für den menschlichen Verzehr aufbereitet werden.

Aromen sind beispielsweise Öle, insbesondere ätherische Öle, aufkonzentrierte geschmacksgebende Stoffe oder wässrige Pflanzenextrakte. Als wässrige Pflanzenextrakte werden im Rahmen dieser Erfindung sämtliche wässrige Zusammensetzungen bezeichnet, die geschmacksgebende Pflanzenbestandteile enthalten, wie beispielsweise Säfte, Saftkonzentrate, Pürrees oder Suspensionen.

Als Aroma geeignete Öle sind beispielsweise Anisöl, Kardamonöl, Cassiaöl, Citronellöl, Dillkrautöl, Eukalyptusöl, Fenchelöl, Grapefruitöl, Ingweröl, Kamillenöl, Krauseminzöl, Kümmelöl, Lemongrasöl, Limettenöl, Minzöl, Muskatsnussöl, Nelkenöl, Orangenöl, Pfefferminzöl, Pfefferöl, Rosenöl, Salbeiöl, Sternanisöl, Walchoderbeeröl, Zimtrindenöl, Zitronenöl oder Mischungen davon.

Besonders geeignet sind außerdem Pflanzenextrakte von Acai, Acerola, Ananas, Apfel, Aprikose, Aronia, Banane, Birne, Blutorange, Boysenbeere, Brombeere, Dattel, Erbse, Erdbeere, Feige, Granatapfel, Grapefruit, Guave, Gurke, Hagebutte, Heidelbeere, Himbeere, Holunderbeere, Holunderblüte, Honigmelone, Ingwer, Johannisbeere, Kaktusfeige, Karotte, Kiwi, Kokosnuss, Kürbis, Limette, Lychee, Mais, Mandarine, Mango, Maracuja/Passionsfrucht, Mirabelle, Moosbeere, Orange, Papaya, Paprika, Pastinake, Petersilie, Pfirsich, Pflaume, Preiselbeere, Quitte, Rhabarber, Rosinen, Rote Beete, Salat, Sanddorn, Sauerkirsche, Schlehe, Sellerie, Stachelbeere, Süßkirsche, Topinambur, Wassermelone, Weintraube, Weiße Beete, Zucchini, Zitrone oder Mischungen davon.

Weitere geeignete Aromen sind beispielsweise Acerola-Aroma, Aloe Vera-Aroma, Amarena-Aroma, Ananas-Aroma, Apfel-Aroma, Apfelstrudel-Aroma, Aprikosen-Aroma, Bananen-Aroma, Beeren-Aroma, Bergamotte-Aroma, Birnen-Aroma, Blueberry-Aroma, Blutorangen-Aroma, Boysenbeer-Aroma, Bratapfel-Aroma, Brauner Zucker-Aroma, Brombeer-Aroma, Chai-Aroma, Citrus-Mix-Aroma, Cranberry-Aroma, Dattel-Aroma, Drachenfrucht-Aroma, Erdbeer-Aroma, Exotic Punch-Aroma, Feigen-Aroma, Früchte-Aroma, Gebäck-Aroma, Glühwein-Aroma, Goji-Aroma, Granatapfel-Aroma, Grapefruit-Aroma, Heidelbeer-Aroma, Heidelbeer-Aroma, Himbeer Aroma, Holunderbeeren-Aroma, Holunderblüten-Aroma, Honig-Aroma, Ingwer-Aroma, Irish Cream-Aroma, Irish-Cream-Aroma, Jasmin-Aroma, Kaktusfeigen-Aroma, Karamell-Aroma, Karamell-Aroma, Käsekuchen-Aroma, Kirsch-Aroma, Kirsch-Aroma, Krauseminze-Aroma, Lemongras-Aroma, Limetten-Aroma, Limetten-Aroma, Litschi-Aroma, Mango-Aroma, Marzipan-Aroma, Mojito-Aroma, Muffin-Aroma, Multifrucht-Aroma, Orangen-Aroma, Pannacotta-Aroma, Passionsfruch-Aroma, Pfefferminze-Aroma, Pfirisch-Aroma, Pflaumen-Aroma, Rhabarber-Aroma, Rum-Aroma, Sahne-Aroma, Sanddorn-Aroma, Schokoladen-Aroma, Schwarze Johannisbeer-Aroma, Spekulatius-Aroma , Sternanis-Aroma, Trauben-Aroma, Vanille-Aroma, Waldfrucht-Aroma, Zimt-Aroma, Zitronen-Aroma oder Mischungen davon.

Für das erfindungsgemäße Verfahren ist es nicht nötig, im Rohmaterial zusätzliche Trägerstoffe einzusetzen. Der Anteil an Trägerstoffen an dem Rohmaterial beträgt deswegen vorzugsweise 20 Gewichtsprozent oder weniger, bevorzugt 5 Gewichtsprozent oder weniger, weiter bevorzugt 2 Gewichtsprozent oder weniger, besonders bevorzugt 1 Gewichtsprozent oder weniger, am meisten bevorzugt 0,1 Gewichtsprozent oder weniger, bezogen auf die Gesamtmasse des Rohmaterials.

Als Trägerstoff werden im Rahmen der Erfindung Substanzen bezeichnet die zusätzliche Bindung zwischen den Inhaltsstoffen ermöglichen. Außerdem helfen Trägerstoffe, das Aroma in dem Rohmaterial gleichmäßig zu verteilen, ohne dass die Trägerstoffe selbst eine geschmacksgebende Funktion haben. Insbesondere werden als Trägerstoffe Kohlenhydrate, insbesondere Polysaccharide bezeichnet. Beispiele für derartige Trägerstoffe sind Sucrose, Glucose, Laktose, Maltose, Fructose, Ribose, Dextrose, Isomalt, Sorbitol, Mannitol, Xylitol, Lactitol, Maltitol, Pentatol, Arabinose, Pentose, Xylose, Galactose, Trehalose, hydrierter Maissirup, Maltodextrin, Agar, Carrageen, Gummi arabicum, Polydextrose oder Mischungen davon. Insbesondere kann mit der vorliegenden Erfindung auf die Zugabe von Gummi arabicum und Maltodextrin verzichtet und deren Anteil an dem Rohmaterial somit auf 20 Gewichtsprozent oder weniger, bevorzugt 5 Gewichtsprozent oder weniger, weiter bevorzugt 2 Gewichtsprozent oder weniger, besonders bevorzugt 1 Gewichtsprozent oder weniger, am meisten bevorzugt 0,1 Gewichtsprozent oder weniger begrenzt werden.

Der Tee bzw. die teeähnlichen Ersatzstoffe werden vorzugsweise in einem Vormischer bereitgestellt, bevor sie in den Extruder eingetragen werden. Dies ist besonders vorteilhaft bei relativ grobem Tee und/oder teeähnlichen Ersatzstoffen mit einer mittleren Partikelgröße von mehr als 0,5 mm bis 5 cm, bevorzugt mehr als 0,5 mm bis 2 cm. Die Verweilzeit des Rohmaterials im Vormischer beträgt vorzugsweise 30 bis 240 Sekunden. Der Vormischer umfasst vorzugsweise eine Vorrichtung zum Kneten des Rohmaterials.

In einer bevorzugten Ausführungsform werden der Tee und/oder die teeähnlichen Ersatzstoffe in dem Vormischer mit Wasser und/oder Aromen vermischt, um das Rohmaterial für den Extrusionsprozess bereitzustellen. Besonders bevorzugt werden der Tee und/oder die teeähnlichen Ersatzstoffe mit flüssigen Aromen, wie beispielsweise Ölen und/oder wässrigen Pflanzenextrakten vermischt.

Um eine gute Extrudierbarkeit des Rohmaterials zu gewährleisten, wird das Rohmaterial vorzugsweise eingeweicht. Dazu wird der Wassergehalt des Rohmaterials im Vormischer auf einen Wert von 0,01 bis 30 Gewichtsprozent, besonders bevorzugt 0,1 bis 15 Gewichtsprozent, am meisten bevorzugt 1 bis 10 Gewichtsprozent eingestellt. Dies findet insbesondere bei grobem Rohmaterial Anwendung.

Alternativ dazu können der Tee und/oder die teeähnlichen Ersatzstoffe direkt in den Extruder eingetragen werden. Dies erfolgt insbesondere bei feinem Rohmaterial mit einer Partikelgröße von bis zu 0,5 mm.

Das erfindungsgemäße Verfahren verwendet einen Doppelschneckenextruder, vorzugsweise einen gleichlaufenden Doppelschneckenextruder. Der Doppelschneckenextruder gliedert sich in Förderrichtung in unterschiedliche Zonen und umfasst dabei zumindest eine Einzugszone, eine erste Kompressionszone, eine Entspannungszone und eine zweite Kompressionszone. Diese Zonen sind in Förderrichtung hintereinander angeordnet und werden in dieser Reihenfolge von dem Extrudat durchlaufen. Die genannten Zonen können unmittelbar aufeinanderfolgen oder durch weitere Zonen voneinander getrennt sein.

Der Doppelschneckenextruder umfasst zwei Schneckenwellen mit darauf aufgesteckten Förderelementen. Die Förderelemente weisen an ihrem Außenumfang eine wendelförmige Vertiefung auf, deren Windungsrichtung die Förderrichtung des Extruders vorgibt. Der zwischen den Stegen der wendelförmige Vertiefung liegende Hohlraum wird als Gang bezeichnet. Der in den einzelnen Zonen vorherrschende Druck kann durch geeignete Wahl der Förderelemente eingestellt werden. Insbesondere kann der Druck durch die Gangtiefe und/oder die Gangsteigung der Förderelemente und durch die Drehzahl der Schneckenwellen variiert werden.

Der Druck innerhalb der einzelnen Extruderzonen wird im Rahmen dieser Erfindung als absoluter Druck angegeben.

Zusätzlich zu den Förderelementen können weitere bekannte Extruderelemente auf die Schneckenwellen aufgesteckt sein, beispielsweise Förderelemente mit gegenläufiger Windungsrichtung, Knetelemente, Zahnscheibenelemente oder Igelelemente.

In der Einzugszone, in der das Rohmaterial in den Extruder eingebracht wird, herrscht vorzugsweise ein Druck von weniger als 1,5 bar.

Die Temperatur in der Einzugszone beträgt vorzugsweise 10 bis 80 °C. Die Temperatur kann insbesondere durch ein Vorheizen des Rohmaterials im Vormischer eingestellt werden. In einer Ausführungsform wird das Rohmaterial nicht oder nur wenig vorgeheizt, so dass die Temperatur in der Einzugszone 10 bis 40 °C, bevorzugt 15 bis 30 °C beträgt. In einer alternativen Ausführungsform beträgt die Temperatur in der Einzugszone 40 bis 80 °C besonders bevorzugt 50 bis 75 °C.

In einer bevorzugten Ausführungsform findet in der Einzugszone eine Befeuchtung des Rohmaterials statt. Zu diesem Zweck kann die Einzugszone eine oder mehrere Düsen aufweisen, mit denen Flüssigkeit in die Einzugszone eingespritzt werden kann. Vorzugsweise wird dem Rohmaterial in der Einzugszone Flüssigkeit in einer Menge von 0,1 Gewichtsprozent bis 30 Gewichtsprozent, bezogen auf die Masse des Rohmaterials, zugeführt. Bei der Flüssigkeit kann es sich um Wasser oder ein flüssiges Aroma, beispielsweise Pflanzensaft, handeln.

In der ersten Kompressionszone wird der Druck auf mehr als 5 bar erhöht. Vorzugsweise herrscht in der ersten Kompressionszone ein Druck von mehr als 5 bar bis 100 bar, besonders bevorzugt 6 bar bis 30 bar, am meisten bevorzugt 7,5 bar bis 10 bar. Der Druck innerhalb der Kompressionszone kann beispielsweise durch Verringerung der Gangtiefe und/oder der Gangsteigung der Förderelemente erhöht werden.

Die Temperatur innerhalb der ersten Kompressionszone beträgt vorzugsweise 50 bis 150°C, besonders bevorzugt 55 bis 100°C, am meisten bevorzugt 60 bis 80°C.

In der ersten Kompressionszone kann auch eine Entgasung vorgesehen sein, um den Feuchtigkeitsgehalt des Rohmaterials zu reduzieren. Der durch die Entgasung bewirkte Druckverlust kann dabei beispielsweise durch Verringerung der Gangtiefe und/oder der Gangsteigung der Förderelemente kompensiert werden. Sofern in der ersten Kompressionszone auch ein Aroma zugegeben wird, wird das Aroma in Förderrichtung hinter der Entgasung zugegeben, um ein Entweichen des gegebenenfalls flüchtigen Aromas zu verhindern.

In einer bevorzugten Ausführungsform ist zwischen der ersten Kompressionszone und der Entspannungszone mindestens ein Knetelement, ein Zahnscheibenelement, ein Igelelement und/oder ein gegenläufiges Förderelement angeordnet. Mithilfe dieser Elemente wird dem Rohmaterial zusätzliche mechanische Energie zugeführt. Dies ermöglicht eine bessere Durchmischung des Rohmaterials und trägt damit zur Aktivierung des Rohmaterials und zur besseren Aufnahme von Aromen bei. Der Druck entlang dieser zusätzlichen Elemente ist nicht besonders festgelegt und kann zwischen dem Druck der ersten Kompressionszone und der Entspannungszone liegen.

In einer bevorzugten Ausführungsform werden Temperatur und Feuchtigkeitsgehalt des Rohmaterials so eingestellt, dass das Rohmaterial geröstet wird. Dies geschieht insbesondere durch die Kombination von Entgasung mit einer Zufuhr mechanischer Energie durch ein Knetelement, Zahnscheibenelement, Igelelement und/oder gegenläufiges Förderelement.

Es ist zusätzlich möglich, zwischen den oben genannten zusätzlichen Knet-, Zahnscheiben-, Igel- bzw. gegenläufigen Förderelementen und der Entspannungszone eine zusätzliche Kompressionszone vorzusehen, in der ein Druck von mehr als 5 bar herrscht. Der Druck in dieser zusätzlichen Kompressionszone beträgt bevorzugt mehr als 5 bar bis 100 bar, besonders bevorzugt 6 bar bis 30 bar, am meisten bevorzugt 7,5 bar bis 10 bar. Mit dieser zusätzlichen Kompressionszone kann auch ein weiterer Temperaturanstieg verbunden sein, so dass die Temperatur in der zusätzlichen Kompressionszone 70 bis 150°C, bevorzugt 80 bis 140°C, am meisten bevorzugt 90 bis 130°C beträgt.

In einer bevorzugten Ausführungsform findet nach der ersten Kompressionszone, bzw. wenn eine zusätzliche Kompressionszone vorgesehen ist, auch nach der zusätzlichen Kompressionszone eine Entgasung statt, um den Feuchtigkeitsgehalt des Rohmaterials zu verringern.

In der Entspannungszone, die in Förderrichtung hinter der Kompressionszone angeordnet ist, wird der Druck auf 5 bar oder weniger verringert. Dies geschieht beispielsweise durch Einsatz von Förderelementen mit größerer Gangtiefe und/oder größerer Gangsteigung als in der Kompressionszone. Der Druck in der Entspannungszone beträgt vorzugsweise 1 bis 5 bar, besonders bevorzugt 3 bis 4 bar.

Vorzugsweise findet in der Entspannungszone eine Entgasung statt, um Feuchtigkeit und Druck des Rohmaterials zu reduzieren. Sofern in der Entspannungszone auch ein Aroma zugegeben wird, wird das Aroma in Förderrichtung hinter der Entgasung zugegeben, um ein Entweichen des gegebenenfalls flüchtigen Aromas zu verhindern.

Vorzugsweise ist die Temperatur in der Entspannungszone niedriger als in der ersten Kompressionszone, besonders bevorzugt ist die Temperatur in der Entspannungszone um mindestens 10°C niedriger als in der ersten Kompressionszone.

Durch die Reduktion des Drucks innerhalb der Entspannungszone wird verhindert, dass das Rohmaterial bei Austritt aus dem Extruder stark expandiert. Auf diese Weise wird ein hohes Schüttgewicht des extrudierten Rohmaterials erzielt.

In der zweiten Kompressionszone wird der Druck auf mehr als 5 bar erhöht. Vorzugsweise herrscht in der zweiten Kompressionszone ein Druck von mehr als 5 bar bis 130 bar, besonders bevorzugt 10 bar bis 100 bar, am meisten bevorzugt 20 bar bis 100 bar.

Die Temperatur innerhalb der zweiten Kompressionszone beträgt vorzugsweise 80 bis 150°C, besonders bevorzugt 90 bis 140°C, am meisten bevorzugt 100 bis 130°C.

Vorzugsweise ist im Anschluss an die zweite Kompressionszone ein gegenläufiges Förderelement angeordnet, das einen gleichmäßigen Austritt des extrudierten Rohmaterials aus dem Extruder ermöglicht.

Im Anschluss an die zweite Kompressionszone bzw. das gegenläufige Förderelement ist eine Austrittsdüse angeordnet, durch die das extrudierte Rohmaterial zu einem Extrudatstrang gepresst wird. Vorzugsweise umfasst die Austrittsdüse eine Lochplatte mit einer oder mehreren Öffnungen zum Austritt des extrudierten Rohmaterials. Die Öffnungen weisen vorzugsweise jeweils eine Durchtrittsfläche von 0,5 bis 8 mm², besonders bevorzugt 1 bis 6 mm², am meisten bevorzugt 0,8 bis 2 mm² auf.

Die Größe der Öffnungen richtet sich typischerweise nach der mittleren Partikelgröße des Tees bzw. des teeähnlichen Erzeugnisses bei Eintrag in den Extruder. Bei Rohware, die in einem Vormischer eingeweicht wurde, beträgt das Verhältnis der mittleren Partikelgröße zu der schmalsten Stelle der Öffnungen bis zu 2. Bei nicht eingeweichter Rohware beträgt das Verhältnis der mittleren Partikelgröße zu der schmalsten Stelle der Öffnungen nicht mehr als 0,7.

In einer bevorzugten Ausführungsform handelt es sich bei der Austrittsdüse um eine Coextrusionsdüse. Mittels einer solchen Düse kann das extrudierte Rohmaterial mit einem Zusatzstoff umhüllt werden. Vorzugsweise wird das extrudierte Rohmaterial mittels einer Coextrusionsdüse mit einem Aroma, vorzugsweise einem Öl oder Pflanzenextrakt, umhüllt. Dabei kann das Aroma direkt an das Rohmaterial gebunden werden, ohne dass zusätzliche Trägerstoffe eingesetzt werden müssen.

Der Extrudatstrang wird nach Austritt aus dem Extruder mit einer Abschneidevorrichtung, beispielsweise einem Schneidmesser, in Granulatpartikel geschnitten. Die mittlere Partikelgröße der Granulatpartikel beträgt vorzugsweise 0,5 bis 5 mm.

Die Granulatpartikel werden vorzugsweise unmittelbar im Anschluss an die Abschneidevorrichtung durch einen Luftstrom getrocknet, um die Hülle des Granulats auszuhärten. Auf diese Weise lässt sich die Haftung von Aromen an und in dem Granulat verbessern. Anschließend kann das Granulat beispielsweise mittels eines Wirbelschichttrockners, eines Bandtrockners oder eines Gegenschichttrockners weiter getrocknet und gekühlt werden.

Die Erfindung betrifft ebenfalls ein durch das oben beschriebene Verfahren herstellbares aromatisiertes aufgussfähiges Granulat aus Tee oder teeähnlichen Ersatzstoffen. Das Granulat umfasst neben Tee und teeähnlichen Ersatzstoffen mindestens ein Aroma.

Der Tee bzw. die teeähnlichen Ersatzstoffe dienen in dem erfindungsgemäßen Granulat als Matrix zur Aufnahme des Aromas. Das Aroma haftet dabei auf der Oberfläche der Granulatpartikel an und/oder ist homogen in den Granulatpartikeln verteilt.

Das Granulat umfasst vorzugsweise einen teeähnlichen Ersatzstoff, besonders bevorzugt getrocknete Früchte, Wurzeln oder Kräuter. In einer bevorzugten Ausführungsform umfasst das Granulat getrockneten Apfel und/oder getrocknete Ingwerwurzel.

Der Anteil an Tee oder teeähnlichen Ersatzstoffen bezogen auf die Masse des Granulats beträgt vorzugsweise 60 bis 99,99 Gewichtsprozent, besonders bevorzugt 90-99,9 Gewichtsprozent.

Der Anteil an Aroma bezogen auf die Masse des Granulats beträgt vorzugsweise 0,01 bis 15 Gewichtsprozent, besonders bevorzugt 0,02 bis 10 Gewichtsprozent, am meisten bevorzugt 0,05 bis 5 Gewichtsprozent. Der Anteil an Aromen wird anhand der nichtwässrigen Bestandteile der Aromen berechnet.

Vorzugsweise umfasst das Granulat keine oder nur einen geringen Anteil an Trägerstoffen. Der Anteil an Trägerstoffen bezogen auf die Masse des Granulats beträgt vorzugsweise 20 Gewichtsprozent oder weniger, bevorzugt 5 Gewichtsprozent oder weniger, weiter bevorzugt 2 Gewichtsprozent oder weniger, besonders bevorzugt 1 Gewichtsprozent oder weniger, am meisten bevorzugt 0,1 Gewichtsprozent oder weniger.

In einer besonders bevorzugten Ausführungsform umfasst das Granulat weder Maltodextrin noch Gummi arabicum bzw. nur einen geringen Anteil davon. Der Anteil an Maltodextrin und Gummi arabicum bezogen auf die Masse des Granulats beträgt vorzugsweise 20 Gewichtsprozent oder weniger, bevorzugt 5 Gewichtsprozent oder weniger, weiter bevorzugt 2 Gewichtsprozent oder weniger, besonders bevorzugt 1 Gewichtsprozent oder weniger, am meisten bevorzugt 0,1 Gewichtsprozent oder weniger.

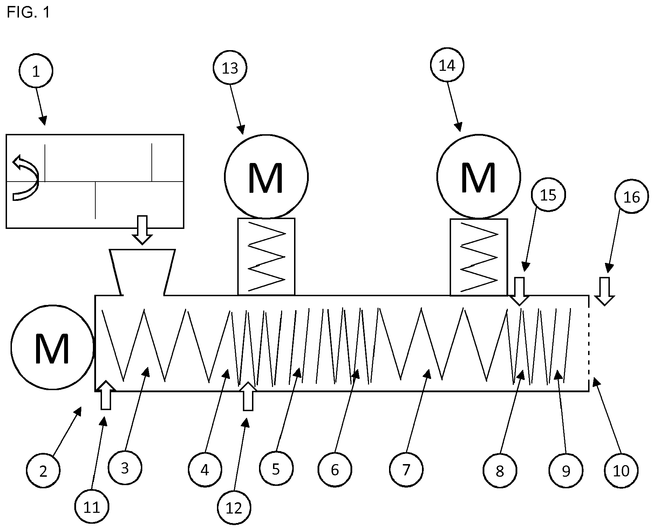

Die Erfindung wird durch das folgende Beispiel unter Bezug auf Fig. 1 veranschaulicht.

Fig. 1 zeigt eine schematische Darstellung eines Extruders zur Herstellung eines aufgussfähigen Granulats aus Tee oder teeähnlichen Ersatzstoffen.

Der Extruder 2 weist eine Eingangszone 3 auf, in die das Rohmaterial aus dem Vormischer 1 eingebracht wird.

Der Vormischer 1 ist dem Extruder 2 vorangestellt. In dem Vormischer 1 werden der Tee bzw. die teeähnlichen Ersatzstoffe als Rohmaterial bereitgestellt und gegebenenfalls mit Wasser und/oder Aromen vermischt. Der Vormischer 1 kann eine Knetvorrichtung aufweisen.

In der Eingangszone 3 ist eine Düse 11 angeordnet, mit der Flüssigkeit eingespritzt werden kann. Damit kann das Rohmaterial in der Eingangszone 3 zusätzlich befeuchtet werden.

Von der Eingangszone 3 gelangt das Rohmaterial in die erste Kompressionszone 4. In der Kompressionszone 4 sind Förderelemente mit einer geringeren Gangtiefe und/oder einer geringeren Gangsteigung als in der Eingangszone 3 angebracht. Dadurch steigt der absolute Druck in der ersten Kompressionszone auf Werte von mehr als 5 bar. In einer Ausführungsform beträgt der Druck in der ersten Kompressionszone 10 bar und die Temperatur der Rohware steigt auf ungefähr 75 °C.

In der Kompressionszone 4 kann über Ventile 13 eine Entgasung des Rohmaterials stattfinden, um Feuchtigkeitsgehalt und Druck innerhalb der Kompressionszone zu regulieren.

Über eine Düse 12 in Bereich 4 können Aromen zu dem Rohmaterial gegeben werden.

In dem Bereich 5 sind Knetelemente angebracht, durch welche das Rohmaterial zusätzlich vermischt und verdichtet wird. Außerdem wird durch die Knetelemente mechanische Energie in das Rohmaterial eingetragen. Dadurch steigt die Temperatur auf ungefähr 80°C. Der Druck fällt an dieser Stelle hingegen auf ungefähr 5 bar. Alternativ zu den Knetelementen können hier auch Igelelemente, Zahnscheibenelemente oder gegenläufige Förderelemente angebracht sein.

Bereich 6 stellt eine zusätzliche Kompressionszone dar. In der zusätzlichen Kompressionszone 6 sind Förderelemente mit einer geringeren Gangtiefe und/oder einer geringeren Gangsteigung als in der Eingangszone 3 angebracht. Der Druck in der zusätzlichen Kompressionszone beträgt mehr als 5 bar. In einer Ausführungsform beträgt der Druck in der zusätzlichen Kompressionszone 10 bar und die Temperatur der Rohware steigt auf ungefähr 100 °C.

In der Entspannungszone 7 wird der absolute Druck innerhalb des Extruders durch den Einsatz von Förderelementen mit größerer Gangtiefe bzw. größerer Gangsteigung als in der Kompressionszone auf einen Wert von ungefähr 3,5 bar reduziert. Zusätzlich kann in diesen Bereich über das Ventil 14 eine Entgasung erfolgen. Nach dem Ventil 14 ist in Förderrichtung eine Düse 15 angeordnet, über die Flüssigkeit, insbesondere ein flüssiges Aroma, in das Rohmaterial eingespritzt werden kann.

Im Anschluss an die Entspannungszone 7 ist die zweite Kompressionszone 8 angeordnet. In dieser steigt der Druck auf ungefähr 30 bar. Die Temperatur beträgt in der zweiten Kompressionszone 8 ungefähr 125°C.

Am Ende der zweiten Kompressionszone 8 ist ein gegenläufiges Förderelement 9 angeordnet.

Nach dem gegenläufigen Förderelement 9 wird das extrudierte Rohmaterial durch eine Lochplatte 10 zu feinen Extrudatsträngen verpresst und durch eine nicht gezeigte Abschneidevorrichtung zu Granulatpartikeln mit einer mittleren Partikelgröße von 0,5 bis 5 mm zerkleinert.

## Patentansprüche

1. Verfahren zur Herstellung eines aufgussfähigen Granulats aus Tee oder teeähnlichen Ersatzstoffen, wobei ein Rohmaterial umfassend Tee und/oder teeähnliche Ersatzstoffe bereitgestellt wird, das Rohmaterial in einem Doppelschneckenextruder zu einem Granulat verarbeitet wird, der Doppelschneckenextruder eine Einzugszone, eine erste Kompressionszone, eine Entspannungszone und eine zweite Kompressionszone umfasst und das Rohmaterial zunächst in der Einzugszone in den Doppelschneckenextruder eingebracht wird, dann in der ersten Kompressionszone bei einem Druck von mehr als 5 bar extrudiert wird, in der Entspannungszone bei einem Druck von 5 bar oder weniger extrudiert wird und in der zweiten Kompressionszone bei einem Druck von mehr als 5 bar extrudiert wird.

2. Verfahren nach Anspruch 1, wobei das Rohmaterial getrocknete Früchte, getrocknete Wurzeln, getrocknete Blüten, und/oder getrocknete Kräuter umfasst.

3. Verfahren nach einem der Ansprüche 1 und 2, wobei das Rohmaterial vor Eintrag in den Extruder oder im Laufe der Extrusion mit einem oder mehreren Aromen versetzt wird.

4. Verfahren nach Anspruch 4, wobei das Rohmaterial vor Eintrag in den Extruder in einem Vormischer mit einem oder mehreren Aromen versetzt wird.

5. Verfahren nach einem der Ansprüche 3 oder 4, wobei ein oder mehrere Aromen in der ersten Kompressionszone und/oder der Entspannungszone zugegeben werden.

6. Verfahren nach einem der Ansprüche 3 bis 5, wobei das Rohmaterial zum Abschluss der Extrusion durch eine Coextrusionsdüse gepresst und dabei mit einem oder mehreren Aromen umhüllt wird.

7. Verfahren nach einem der Ansprüche 3 bis 6, wobei als Aroma ein Öl oder ein wässriger Pflanzenextrakt eingesetzt wird.

8. Verfahren nach einem der Ansprüche 1 bis 7, wobei der Druck in der Einzugszone 1,5 bar oder weniger beträgt.

9. Verfahren nach einem der Ansprüche 1 bis 8, wobei der Druck in der ersten Kompressionszone 6 bar bis 30 bar, der Druck in der Entspannungszone 1 bis 5 bar und der Druck in der zweiten Kompressionszone 20 bis 100 bar beträgt.

10. Verfahren nach einem der Ansprüche 1 bis 9, wobei in der Entspannungszone eine Entgasung stattfindet.

11. Verfahren nach einem der Ansprüche 1 bis 10, wobei zwischen der ersten Kompressionszone und der Entspannungszone mindestens ein Knetelement, mindestens ein Igelelement, mindestens ein Zahnscheibenelement und/oder mindestens ein gegenläufiges Förderelement angeordnet ist.

12. Aufgussfähiges Granulat aus Tee oder einem teeähnlichen Ersatzstoff und wenigstens einem Aroma, herstellbar durch das Verfahren nach einem der Ansprüche 1 bis 11.

13. Granulat nach Anspruch 12, wobei das Granulat 60 bis 99,99 Gewichtsprozent Tee oder teeähnlichen Ersatzstoff und 0,01 bis 15 Gewichtsprozent Aroma enthält, jeweils bezogen auf die Masse des Granulats.

14. Granulat nach einem der Ansprüche 12 und 13, wobei das Granulat 20 Gewichtsprozent oder weniger an Trägerstoffen bezogen auf die Masse des Granulats enthält.
